# EUROPÄISCHE PATENTANMELDUNG

(11) **EP 4 404 162 A1**
(43) Veröffentlichungstag der Anmeldung: **24.07.2024**
(21) Anmeldenummer: 23216172.9
(22) Anmeldetag: 13.12.2023
(51) Int. Cl.: G08B 13/196, G06V 20/52, H04N 7/18

(54) **SENSORSYSTEM UND VERFAHREN ZUM BETRIEB EINES SENSORSYSTEMS**

(30) Priorität: 18.01.2023 DE 102023101110
(71) Anmelder: Krebs, Matthias, 73105 Dürnau (DE)
(72) Erfinder: Krebs, Matthias, 73105 Dürnau (DE)
(74) Vertreter: Ruckh, Rainer Gerhard

(57) **Zusammenfassung**

Die Erfindung betrifft ein Verfahren zum Betrieb einer Sensorsystem (1) mit einem in einem Innenraum (3) eines Gebäudes angeordneten Kamerasystem (2) und mit einer dem Kamerasystem (2) zugeordneten Steuer- und Auswerteeinheit (5). Abhängig von Sensorsignalen des Kamerasystems (2) wird eine Objektverfolgung durchgeführt. Eine Objektidentifikation wird abhängig von Sensorsignalen des Kamerasystems (2) und/oder mit Identifikationsmitteln (7) durchgeführt. In der Steuer- und Auswerteeinheit (5) wird abhängig von durchgeführten Objektverfolgungen und Objektidentifikationen eine Kategorisierung von sicherheitskritischen und nichtsicherheitskritischen Zuständen durchgeführt. Die Steuer- und Auswerteeinheit (5) generiert bei Vorhandensein eines sicherheitskritischen Zustands ein Ausgangssignal.

## Beschreibung

Die Erfindung betrifft ein Sensorsystem und ein Verfahren zum Betrieb eines Sensorsystems.

Derartige Sensorsysteme werden insbesondere als Kontroll- und Überwachungsvorrichtungen eingesetzt. Ein Beispiel hierfür ist die Überwachung eines Gefahrenbereichs an einer Anlage, von der Gefahren für Personen ausgehen können. Das hierfür eingesetzte Sensorsystem umfasst einen Sensor, mit dem ein Schutzfeld im Vorfeld der Anlage überwacht wird.

Zur Ausbildung derartiger Sensorsysteme werden typischerweise optische Sensoren eingesetzt. Ein Beispiel hierfür ist ein Lichtvorhang, mit dem ein flächiges Schutzfeld überwacht wird. Mit dieser Schutzfeldüberwachung wird typischerweise ein Zugang zu einem Gefahrenbereich überwacht.

Weiterhin bekannt sind optische Sensoren in Form von Laserscannern oder Kamerasensoren. Mit diesen Sensoren werden zwei- oder dreidimensionale Schutzfelder im Vorfeld einer Anlage überwacht.

Die Funktion derartiger Sensorsysteme ist derart, dass der Sensor erfasst, ob ein Objekt in das jeweilige Schutzfeld eindringt oder nicht. Dringt ein Objekt in das Schutzfeld ein, generiert der Sensor einen Abschaltbefehl für die Anlage, so dass von dieser keine Gefahren mehr ausgehen können.

Der Erfindung liegt die Aufgabe zugrunde, ein Sensorsystem mit hoher Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Sensorsystem mit einem in einem Innenraum eines Gebäudes angeordneten Kamerasystem und mit einer dem Kamerasystem zugeordneten Steuer- und Auswerteeinheit. Abhängig von Sensorsignalen des Kamerasystems wird eine Objektverfolgung durchgeführt. Eine Objektidentifikation wird abhängig von Sensorsignalen des Kamerasystems und/oder mit Identifikationsmitteln durchgeführt. In der Steuer- und Auswerteeinheit wird abhängig von durchgeführten Objektverfolgungen und Objektidentifikationen eine Kategorisierung von sicherheitskritischen und nichtsicherheitskritischen Zuständen durchgeführt. Die Steuer- und Auswerteeinheit generiert bei Vorhandensein eines sicherheitskritischen Zustands ein Ausgangssignal.

Die Erfindung betrifft auch ein entsprechendes Verfahren.

Mit dem erfindungsgemäßen Sensorsystem wird eine Überwachungs- und Kontrollfunktion bereitgestellt, mit derer ein Innenraum eines Gebäudes in einer Gesamtheit überwacht werden kann. Die Funktionalität des erfindungsgemäßen Sensorsystems ist damit gegenüber bekannten Systemen, die begrenzte Schutzfeldüberwachungen durchführen, erweitert.

Ein wesentlicher Aspekt der Erfindung besteht dabei darin, dass ein Kamerasystem eingesetzt wird, mit welchem im gesamten Innenraum des Gebäudes Positionen von Objekten bzw. Personen ermittelt werden können, wodurch der gesamte Innenraum überwacht werden kann. Dadurch ist eine Objektverfolgung im gesamten Innenraum möglich.

Ein weiterer wesentlicher Aspekt der Erfindung besteht darin, dass mit dem Sensorsystem Objekte, insbesondere auch Personen, identifiziert werden können. Für die so identifizierten Objekte bzw. Personen können Objektverfolgungen durchgeführt werden, um so Kontroll- bzw. Überwachungsfunktionen durchzuführen. Die Objektidentifikation kann dabei mit dem Kamerasystem und/oder mit separaten Identifikationsmitteln durchgeführt werden.

Erfindungsgemäß erfolgt in der Steuer- und Auswerteeinheit abhängig von durchgeführten Objektverfolgungen und Objektidentifikationen eine Kategorisierung in sicherheitskritische und nichtsicherheitskritische Zustände, d.h. die Steuer- und Auswerteeinheit führt selbsttätig eine Risiko- und Gefahrenanalyse durch. Als Ergebnis generiert die Steuer- und Auswerteeinheit bei Vorhandensein eines sicherheitskritischen Zustands ein Ausgangssignal, mit dem generell eine Sicherheitsfunktion realisiert wird.

Das erfindungsgemäße Sensorsystem bildet somit ein Sicherheitssystem, das insbesondere zur Erhöhung der Personensicherheit oder zum Schutz von Arbeitseinrichtungen, wie Fertigungseinrichtungen, dient.

Gemäß einer vorteilhaften Ausführungsform bildet das Kamerasystem ein Triangulationssystem aus.

Mit dem Kamerasystem werden generell Bildinformationen gewonnen, anhand der Objekte und Personen erkannt werden können. Zudem dient das Kamerasystem auch zur Positionsbestimmung von Objekten und Personen im Innenraum, so dass eine zeitaufgelöst und ortsaufgelöste Objektverfolgung ermöglicht wird. Mittels der Triangulation wird eine besonders zuverlässige und genaue Positionsbestimmung ermöglicht, wobei die Messgenauigkeit typisch im Bereich von 1 cm liegt. Zur Durchführung von Triangulationsmessungen umfasst das Kameramodul mehrere ortsfest angeordnete Kameramodule, die somit in fester, bekannter, räumlicher Zuordnung zueinander stehen.

Gemäß einer besonders vorteilhaften Ausführungsform ist die Steuer- und Auswerteeinheit ein cloudbasiertes Rechnersystem.

Durch die Verlagerung der Steuer- und Auswerteeinheit in eine Cloud kann die Auswertung von Sensorsignalen des Kamerasystems und die Durchführung von Objektverfolgungen völlig unabhängig vom Installationsort des Kamerasystems erfolgen. Weiterhin ist damit eine einfache Erweiterung des Sensorsystems auf mehrere Kamerasysteme möglich, die in unterschiedlichen Innenräumen von Gebäuden an unterschiedlichen Orten angeordnet sind.

Zudem ist vorteilhaft, dass zur Ausbildung der Steuer- und Auswerteeinheit keine lokale Hardware installiert werden muss, was einen erhöhten Konstruktions- und Wartungsaufwand bedeuten würde.

Die Komponenten des Sensorsystems können vielmehr das Internet zur Anbindung an die Cloud nutzen, was keinen zusätzlichen Hardwareaufwand erfordert.

Gemäß einer vorteilhaften Ausgestaltung ist in der Steuer- und Auswerteeinheit oder im Kamerasystem eine objektfreie Umgebung des Innenraums abgespeichert. Objekte werden durch Vergleich aktueller, mit dem Kamerasystem generierter Bilder mit der gespeicherten Umgebung erkannt.

Durch diesen Referenzvergleich können zu überwachende Objekte besonders sicher erfasst und von einem Hintergrund unterschieden werden.

Vorteilhaft erfolgt mittels des Kamerasystems eine Objektidentifikation durch Erkennung vorgegebener Merkmale dieses Objekts.

Dies stellt eine besonders einfache Art der Objektidentifikation dar, die mit dem Kamerasystem selbst durchgeführt werden kann.

Gemäß einer vorteilhaften Ausführungsform sind Objekte anhand einer Objekt-ID identifizierbar, welche mit den Identifikationsmitteln erfassbar sind.

Insbesondere ist das jeweils eine Objekt-ID einer Person zugewiesen.

Mit den Objekt-IDs können Objekte und Personen eindeutig identifiziert werden.

Gemäß einer ersten vorteilhaften Ausgestaltung ist die Objekt-ID von einem optischen Code oder einer Face-ID gebildet.

In diesem Fall ist die Objekt-ID von einem Identifikationsmittel in Form eines Kameramoduls erfassbar.

Vorteilhaft ist das Kameramodul Bestandteil des Kamerasystems.

Gemäß einer alternativen Ausgestaltung ist die Objekt-ID von einem Code gebildet, der in einem einem Objekt zugeordneten RFID-Chip gespeichert ist.

Dann ist das Identifikationsmittel von einer RFID-Leseeinheit gebildet.

Bei beiden Ausgestaltungen sind die Identifikationsmittel vorteilhaft im Eingangsbereich des Innenraums angeordnet, so dass die Identifikation einer Person bei deren Zugang zum Innenraum erfolgen kann. Parallel wird dann die Objektverfolgung der Person mit dem Kamerasystem aufgenommen, wodurch eine eindeutige Zuordnung der Objekt-ID und der Sensorsignale des Kamerasystems zur Positionsbestimmung zu dieser Person in der Steuer- und Auswerteeinheit vorgenommen werden kann.

Für die Identifikation von Objekten können im Innenraum eine oder mehrere Stationen mit Identifikationsmitteln vorhanden sein, die fortlaufend mit den Kamerasystemen erfasst werden. An einer solchen Station erkennen die Identifikationsmittel die Objekt-ID. Zudem wird das Objekt mit dem Kamerasystem erfasst, wodurch wieder eine eindeutige Zuordnung von Sensorsignalen des Kamerasystems zur Objekt-ID, die mit den Identifikationsmitteln erfasst werden, gegeben ist.

Eine erste Applikation des Sensorsystems kann derart ausgebildet sein, dass in einer Fertigungsumgebung unzulässige Objekte erkannt werden. In der Steuer- und Auswerteeinheit wird eine Warnmeldung generiert, falls ein unzulässiges Objekt erkannt wird.

Mit Fertigungseinrichtungen, insbesondere automatisierten Fertigungseinrichtungen, werden spezifische Bauteile bearbeitet, wobei die Bauteile mit Förderbändern oder dergleichen transportiert werden. Befindet sich dort ein Fremdobjekt, wie z.B. eine Werkzeugkiste, die versehentlich abgestellt wurde, kann dies zu Störungen im Fertigungsablauf oder zu Beschädigungen der Fertigungseinrichtungen führen. Derartige Gefahrensituationen können mit dem Sensorsystem frühzeitig erkannt werden. Anhand der Warnmeldung kann das Fremdobjekt rechtzeitig beseitigt werden.

Eine weitere Applikation des Sensorsystems ist derart ausgebildet, dass eine Objektverfolgung von mit Objekt-ID gekennzeichneten Personen durchgeführt wird, wobei bei Feststellen einer Abnormalität der Bewegung wenigstens einer Person in der Steuer- und Auswerteeinheit eine Alarmmeldung generiert wird.

Gemäß einer ersten Ausgestaltung wird in der Steuer- und Auswerteeinheit eine Alarmmeldung dann generiert, wenn sich eine mit einer Objekt-ID gekennzeichnete Person für einen vorgegebenen Zeitraum nicht bewegt hat.

Bei dieser Ausführungsform stellt das Sensorsystem ein Mittel zur Gewährleistung der Arbeitssicherheit für Personen in Arbeitsumgebungen dar. In Arbeitsumgebungen, in denen nur einzelne Personen an Arbeitsplätzen arbeiten, ist die Bewegungserkennung der Person ein wesentliches Sicherheitsmittel derart, dass Gefährdungen von Personen, die z.B. einen Unfall haben und bewegungsunfähig am Arbeitsplatz liegen, rechtzeitig erkannt werden können, um so Hilfe leisten zu können.

Gemäß einer weiteren Ausgestaltung wird in der Steuer- und Auswerteeinheit eine Alarmmeldung dann generiert, wenn sich nicht mindestens zwei mit einer Objekt-ID gekennzeichnete Personen im Innenraum aufhalten.

Auch diese Ausführungsform des Sensorsystems stellt ein Mittel zur Gewährleistung der Arbeitssicherheit dar. Insbesondere in Umgebungen, in welchen Gefahren für Personen vorhanden sind, ist es aus Arbeitsschutzgründen erforderlich, dass immer wenigstens zwei Personen gleichzeitig vorhanden sind, was mit dem erfindungsgemäßen Sensorsystems kontrolliert werden kann.

Gemäß einer Variante wird in der Steuer- und Auswerteeinheit eine Alarmmeldung generiert, wenn im Innenraum neben mit Objekt-ID gekennzeichneten Person weitere Personen erfasst werden.

Somit können mit dem Sensorsystem Personen erfasst werden, die sich unbefugt im Innenraum aufhalten.

Gemäß einer weiteren Ausgestaltung wird in der Steuer- und Auswerteeinheit eine Alarmmeldung generiert, wenn nicht autorisierte Personen in benutzerbeschränkten Raumbereichen des Innenraums erfasst werden.

Mit dem Sensorsystem kann somit kontrolliert werden, ob Raumbereiche mit Zugangsbeschränkungen von nicht autorisierten Personen betreten werden. Dadurch wird ein zuverlässiges und gleichzeitig flexibles Zugangskontrollsystem bereitgestellt.

Die Erfindung wird im Folgenden anhand der Zeichnungen erläutert. Es zeigen:
- Figur 1:: Schematische Darstellung eines ersten Ausführungsbeispiels des erfindungsgemäßen Sensorsystems.
- Figur 2:: Schematische Darstellung eines zweiten Ausführungsbeispiels des erfindungsgemäßen Sensorsystems.

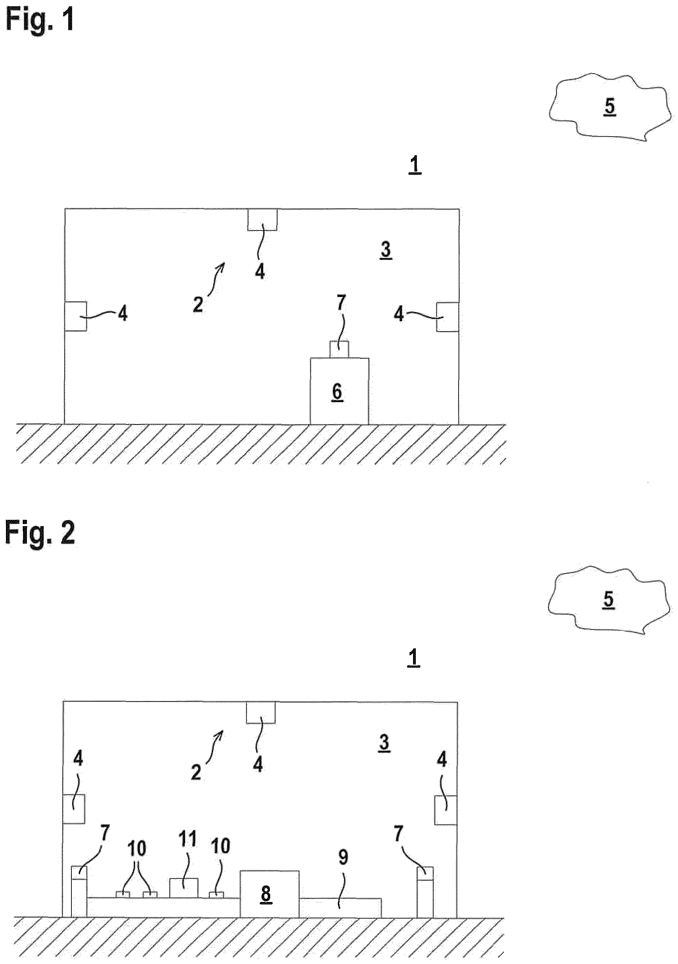

Figur 1 zeigt in stark schematisierter Form ein erstes Ausführungsbeispiel des erfindungsgemäßen Sensorsystems 1.

Das Sensorsystem 1 umfasst ein Kamerasystem 2, das in einem Innenraum 3 eines Gebäudes installiert ist.

Das Kamerasystem 2 umfasst mehrere Kameramodule 4, die ortsfest in definierten Abständen zueinander an Innenwänden oder an der Decke des Innenraums 3 installiert sind. Jedes Kameramodul 4 weist in bekannter Weise einen Bildsensor mit zugeordneter Optik auf. Zudem kann das Kameramodul 4 eine Beleuchtungseinheit aufweisen. Schließlich weist das Kameramodul 4 eine Auswerteeinheit auf, in welcher vom Bildsensor generierte Empfangssignale ausgewertet werden, wodurch Bildinformationen gewonnen werden. Vorteilhaft sind die Abstände der Kameramodule 4 zueinander in den Auswerteeinheiten hinterlegt.

Die Kameramodule 4 des Kamerasystems 2 bilden ein Triangulationssystem, mit dem nicht nur Bildinformationen von Objekten bzw. Personen gewonnen werden können, sondern auch deren Positionen im Innenraum 3 bestimmt werden können.

Das Kamerasystem 2 mit seinen Kameramodulen 4 ist über das Internet mit einer Cloud, d.h. einem cloudbasierten Rechnersystem verbunden, das eine Steuer- und Auswerteeinheit 5 des Sensorsystems 1 bildet.

Die Steuer- und Auswerteeinheit 5 steuert die Komponenten des Sensorsystems 1 und wertet im Kamerasystem 2 generierte Sensorsignale oder daraus abgeleitete Größen aus.

Im Bereich eines Eingangs 6 zum Innenraum 3 befinden sich Identifikationsmittel 7 zur Erfassung von Objekt-IDs, die jeweils einer Person zugewiesen werden.

Gemäß einer ersten Ausgestaltung ist die Objekt-ID von einem optischen Code oder einer Face-ID gebildet.

Dann ist das Identifikationsmittel 7 von einem Kameramodul 4 gebildet, das vorteilhaft Bestandteil des Kamerasystems 2 ist.

Generell ist es auch möglich, dass mittels des Kamerasystems 2 eine Objektidentifikation durch Erkennung vorgegebener Merkmale dieses Objekts erfolgt.

Gemäß einer zweiten Ausgestaltung ist die Objekt-ID von einem Code gebildet, der in einem einem Objekt zugeordneten RFID-Chip gespeichert ist.

Dann ist das Identifikationsmittel 7 von einer RFID-Leseeinheit gebildet.

In jedem Fall wird die für eine Person erfasste Objekt-ID in der Steuer- und Auswerteeinheit 5 gespeichert. Sobald die Person über den Eingang 6 den Innenraum 3 betritt, startet mit dem Kamerasystem 2 die Objektverfolgung für diese Person, d.h. das Kamerasystem 2 bestimmt fortlaufend die Position der Person. Die Messwerte bzw. Resultate der Messung werden in die Steuer- und Auswerteeinheit 5 übertragen und dort mit der Objekt-ID verknüpft.

Vorteilhaft erfolgt die Objekterfassung mit dem Kamerasystem 2 derart, dass in der Steuer- und Auswerteeinheit 5 oder im Kamerasystem 2 eine obj ektfreie Umgebung des Innenraums 3 abgespeichert ist. Objekte werden durch Vergleich aktueller, mit dem Kamerasystem 2 generierter Bilder mit der gespeicherten Umgebung, erkannt.

Erfindungsgemäß erfolgt in der Steuer- und Auswerteeinheit 5 abhängig von durchgeführten Objektverfolgungen und Objektidentifikationen eine Kategorisierung von sicherheitskritischen und nichtsicherheitskritischen Zuständen. Ist ein sicherheitskritischer Zustand vorhanden, generiert die Steuer- und Auswerteeinheit 5 ein Ausgangssignal in Form einer Sicherheitsfunktion.

Im vorliegenden Fall wird eine Objektverfolgung von mit Objekt-ID gekennzeichneten Personen durchgeführt, wobei bei Feststellen einer Abnormalität der Bewegung wenigstens einer Person in der Steuer- und Auswerteeinheit 5 eine Alarmmeldung generiert wird.

Gemäß einer ersten Variante wird in der Steuer- und Auswerteeinheit 5 eine Alarmmeldung dann generiert, wenn sich eine mit einer Objekt-ID gekennzeichnete Person für einen vorgegebenen Zeitraum nicht bewegt hat.

Damit kann erkannt werden, ob eine Person infolge eines Unfalls, eines Schwächeanfalls oder dergleichen bewegungsunfähig geworden ist.

Gemäß einer zweiten Variante wird in der Steuer- und Auswerteeinheit 5 eine Alarmmeldung dann generiert, wenn sich nicht mindestens zwei mit einer Objekt-ID gekennzeichnete Personen im Innenraum 3 aufhalten.

Dies stellt eine Maßnahme der Arbeitssicherheit dar. In gefährlichen Umgebungen wird aus Sicherheitsgründen gefordert, dass immer wenigstens zwei Personen anwesend sind, was mit dem Sensorsystem 1 kontrolliert wird.

Gemäß einer dritten Variante wird in der Steuer- und Auswerteeinheit 5 eine Alarmmeldung generiert, wenn im Innenraum 3 neben mit Objekt-ID gekennzeichneten Person weitere Personen erfasst werden.

Figur 2 zeigt ein zweites Ausführungsbeispiel des erfindungsgemäßen Sensorsystems 1. Die Ausbildung des Kamerasystems 2 und der Steuer- und Auswerteeinheit 5 entspricht der Ausführungsform gemäß Figur 1.

Bei der Ausführungsform gemäß Figur 2 ist im Innenraum 3 eine Fertigungsvorrichtung 8 mit einem Fördersystem 9 vorhanden. Mit dem Fördersystem 9 werden der Fördervorrichtung 8 Bauteile 10 zugeführt, wo diese bearbeitet werden.

Auf dem Fördersystem 9 befindet sich ein Fremdobjekt 11, beispielsweise ein dort vergessener Werkzeugkoffer. Würde dieses Fremdobjekt 11 der Fertigungseinrichtung zugeführt, würden Fertigungsprozesse, die dort ausgeführt werden, unterbrochen und die Fertigungsvorrichtung 8 würde ggf. beschädigt.

Derartige Gefahrensituationen werden mit dem Sensorsystem 1 unterbunden.

Im Innenraum 3 befinden sich Stationen mit Identifikationsmitteln 7, die zur Erfassung von Objekt-IDs von zulässigen Objekten dienen. Das Fremdobjekt 11 kann auch eine Objekt-ID aufweisen, muss es aber nicht.

Durch Objektverfolgungen von Objekten im Innenraum 3 mittels des Kamerasystems 2 wird das Fremdobjekt 11 auf dem Fördersystem 9 erfasst und in der Steuer- und Auswerteeinheit 5 als sicherheitskritischer Zustand klassifiziert.

Die Steuer- und Auswerteeinheit 5 generiert daraufhin eine Warnmeldung, wodurch Bedienpersonal das Fremdobjekt 11 vom Fördersystem 9 beseitigen kann, so dass der Fertigungsprozess ungestört weiterlaufen kann.

### Bezugszeichenliste

- (1): Sensorsystem
- (2): Kamerasystem
- (3): Innenraum
- (4): Kameramodul
- (5): Steuer- und Auswerteeinheit
- (6): Eingang
- (7): Identifikationsmittel
- (8): Fertigungsvorrichtung
- (9): Fördersystem
- (10): Bauteil
- (11): Fremdobjekt

## Patentansprüche

1. Sensorsystem (1) mit einem in einem Innenraum (3) eines Gebäudes angeordneten Kamerasystem (2) und mit einer dem Kamerasystem (2) zugeordneten Steuer- und Auswerteeinheit (5), **dadurch gekennzeichnet, dass** abhängig von Sensorsignalen des Kamerasystems (2) eine Objektverfolgung durchgeführt wird, dass abhängig von Sensorsignalen des Kamerasystems (2) und/oder mit Identifikationsmitteln (7) eine Objektidentifikation durchgeführt wird, dass in der Steuer- und Auswerteeinheit (5) abhängig von durchgeführten Objektverfolgungen und Objektidentifikationen eine Kategorisierung von sicherheitskritischen und nichtsicherheitskritischen Zuständen durchgeführt wird, und dass die Steuer- und Auswerteeinheit (5) bei Vorhandensein eines sicherheitskritischen Zustands ein Ausgangssignal generiert.

2. Sensorsystem (1) nach Anspruch 1, **dadurch gekennzeichnet, dass** das Kamerasystem (2) ein Triangulationssystem ausbildet, und/oder dass die Steuer- und Auswerteeinheit (5) ein cloudbasiertes Rechnersystem ist.

3. Sensorsystem (1) nach einem der Ansprüche 1 oder 2, **dadurch gekennzeichnet, dass** in der Steuer- und Auswerteeinheit (5) oder im Kamerasystem (2) eine objektfreie Umgebung des Innenraums (3) abgespeichert ist, und dass Objekte durch Vergleich aktueller, mit dem Kamerasystem (2) generierter Bilder mit der gespeicherten Umgebung erkannt werden.

4. Sensorsystem (1) nach einem der Ansprüche 1 bis 3, **dadurch gekennzeichnet, dass** mittels des Kamerasystems (2) eine Objektidentifikation durch Erkennung vorgegebener Merkmale dieses Objekts erfolgt, und/oder dass Objekte anhand einer Objekt-ID identifizierbar sind, welche mit den Identifikationsmitteln (7) erfassbar sind.

5. Sensorsystem (1) nach Anspruch 4, **dadurch gekennzeichnet, dass** die Objekt-ID von einem optischen Code oder einer Face-ID gebildet ist, dass die Objekt-ID von einem Identifikationsmittel (7) in Form eines Kameramoduls (4) erfassbar ist, wobei das Kameramodul (4) Bestandteil des Kamerasystems (2) oder eine separate Einheit ist.

6. Sensorsystem (1) nach Anspruch 4, **dadurch gekennzeichnet, dass** die Objekt-ID von einem Code gebildet ist, der in einem Objekt zugeordneten RFID-Chip gespeichert ist, und dass das Identifikationsmittel (7) von einer RFID-Leseeinheit gebildet ist.

7. Sensorsystem (1) nach einem der Ansprüche 4 bis 6, **dadurch gekennzeichnet, dass** die Objekt-ID von Objekten von Identifikationsmitteln (7) an die Steuer- und Auswerteeinheit (5) übertragen und dort abgespeichert werden.

8. Sensorsystem (1) nach einem der Ansprüche 4 bis 7, **dadurch gekennzeichnet, dass** jeweils eine Objekt-ID einer Person zugewiesen ist.

9. Sensorsystem (1) nach einem der Ansprüche 1 bis 8, **dadurch gekennzeichnet, dass** in einer Fertigungsumgebung unzulässige Objekte erkannt werden, und dass in der Steuer- und Auswerteeinheit (5) eine Warnmeldung generiert wird, falls ein unzulässiges Objekt erkannt wird.

10. Sensorsystem (1) nach einem der Ansprüche 1 bis 9, **dadurch gekennzeichnet, dass** eine Objektverfolgung von mit Objekt-IDs gekennzeichneten Personen durchgeführt wird, wobei bei Feststellen einer Abnormalität der Bewegung wenigstens einer Person in der Steuer- und Auswerteeinheit (5) eine Alarmmeldung generiert wird.

11. Sensorsystem (1) nach Anspruch 10, **dadurch gekennzeichnet, dass** in der Steuer- und Auswerteeinheit (5) eine Alarmmeldung dann generiert wird, wenn sich eine mit einer Objekt-ID gekennzeichnete Person für einen vorgegebenen Zeitraum nicht bewegt hat.

12. Sensorsystem (1) nach Anspruch 11, **dadurch gekennzeichnet, dass** in der Steuer- und Auswerteeinheit (5) eine Alarmmeldung dann generiert wird, wenn sich nicht mindestens zwei mit einer Objekt-ID gekennzeichnete Personen im Innenraum (3) aufhalten.

13. Sensorsystem (1) nach Anspruch 11, **dadurch gekennzeichnet, dass** in der Steuer- und Auswerteeinheit (5) eine Alarmmeldung generiert wird, wenn im Innenraum (3) neben mit Objekt-ID gekennzeichneten Person weitere Personen erfasst werden.

14. Sensorsystem (1) nach Anspruch 11, **dadurch gekennzeichnet, dass** in der Steuer- und Auswerteeinheit (5) eine Alarmmeldung generiert wird, wenn nicht autorisierte Personen in benutzerbeschränkten Raumbereichen des Innenraums (3) erfasst werden.

15. Verfahren zum Betrieb einer Sensorsystem (1) mit einem in einem Innenraum (3) eines Gebäudes angeordneten Kamerasystem (2) und mit einer dem Kamerasystem (2) zugeordneten Steuer- und Auswerteeinheit (5), **dadurch gekennzeichnet, dass** abhängig von Sensorsignalen des Kamerasystems (2) eine Objektverfolgung durchgeführt wird, dass abhängig von Sensorsignalen des Kamerasystems (2) und/oder mit Identifikationsmitteln (7) eine Objektidentifikation durchgeführt wird, dass in der Steuer- und Auswerteeinheit (5) abhängig von durchgeführten Objektverfolgungen und Objektidentifikationen eine Kategorisierung von sicherheitskritischen und nichtsicherheitskritischen Zuständen durchgeführt wird und dass die Steuer- und Auswerteeinheit (5) bei Vorhandensein eines sicherheitskritischen Zustands ein Ausgangssignal generiert.
